# DEMANDE DE BREVET EUROPEEN

(11) **EP 2 881 569 A1**
(43) Date de publication de la demande: **10.06.2015**
(21) Numéro de dépôt: 14194565.9
(22) Date de dépôt: 24.11.2014
(51) Int. Cl.: F02K 1/60

(54) **Inverseur de poussée de nacelle de turboréacteur comprenant deux volets pivotants qui ferment la veine annulaire**

(30) Priorité: 03.12.2013 FR 1362033
(71) Demandeur: Aircelle, 76700 Gonfreville L'Orcher (FR)
(72) Inventeur: Caruel, Pierre, 76600 Le Havre (FR)
(74) Mandataire: Gaillarde, Frédéric F. Ch.

(57) **Abrégé**

Inverseur de poussée d'une nacelle de turboréacteur à double flux, comprenant un capot mobile (4) qui recule par rapport à une structure avant fixe (2) pour dégager des ouvertures radialement vers l'extérieur, ainsi que des grilles (6) disposées dans ces ouvertures pour dévier le flux les traversant vers l'avant, qui sont solidaires du capot mobile, caractérisé en ce qu'il comporte deux volets pivotants (12) disposés sensiblement symétriquement par rapport à un plan axial (P), qui sont reliés à la structure avant fixe par des biellettes (16), chaque volet comprenant des points pivots (18) reliés au capot (4) de manière à ce que lors du recul du capot, ces volets pivotent en fermant en majeure partie le passage du flux direct.

## Description

La présente invention concerne un inverseur de poussée pour une nacelle d'aéronef recevant un turboréacteur, ainsi qu'une nacelle d'aéronef équipée d'un tel inverseur de poussée.

Les ensembles de motorisation pour les aéronefs comportent généralement une nacelle formant une enveloppe extérieure globalement circulaire, comprenant à l'intérieur un turboréacteur disposé suivant l'axe longitudinal de cette nacelle. Le turboréacteur reçoit de l'air frais venant du côté amont ou avant, et rejette du côté aval ou arrière les gaz chauds issus de la combustion du carburant, qui donnent une certaine poussée.

Les turboréacteurs à double flux présentent autour de son générateur de gaz des aubes de soufflante générant un flux secondaire important d'air froid le long d'une veine annulaire passant entre le moteur et la nacelle, qui ajoute une poussée élevée en fonctionnement normal dit « jet direct ».

Certaines nacelles comportent un système d'inversion de poussée qui ferme au moins en partie la veine annulaire d'air froid, et rejette le flux secondaire vers l'avant en formant un jet inversé qui génère une contre-poussée de freinage de l'aéronef.

Un type d'inverseur de poussée connu, en particulier pour les turboréacteurs à flux mélangés dans lesquels les flux chaud et froid sont mixés ensemble, présenté notamment par le document FR-A1-2813103, comporte à l'arrière de la nacelle des portes qui basculent dans une position ouverte afin de fermer en grande partie le passage du flux direct vers l'arrière. Les portes dévient alors ce flux radialement vers l'extérieur en passant par des ouvertures transversales dégagées par leur déploiement, afin de le renvoyer en partie vers l'avant en générant une poussée inversée.

De plus pour améliorer l'efficacité en jet inversé, on dispose à l'intérieur de chaque porte un becquet avant tourné vers l'avant quand cette porte est ouverte, qui augmente la déviation de l'écoulement.

Un problème qui se pose pour ce type d'inverseur, est que ce béquet crée des cavités à l'intérieur de la veine annulaire qui dégradent les performances en jet direct. Il faut alors réaliser un compromis entre les performances en jet direct et en jet inversé, qui conduit généralement à une efficacité du jet inversé faible, de l'ordre de 25%.

De plus pour un turboréacteur à flux mélangés, plus son diamètre est important, plus le compromis entre le fonctionnement en jet direct et en jet inversé est difficile à réaliser.

Par ailleurs pour ce type d'inverseur l'épaisseur du bord de fuite est importante ce qui diminue ses qualités aérodynamiques, et la capacité de pilotage de la direction du flux d'air inversé est médiocre.

La présente invention a notamment pour but d'éviter ces inconvénients de la technique antérieure.

Elle propose à cet effet un inverseur de poussée d'une nacelle de turboréacteur à double flux, comprenant un capot mobile qui recule par rapport à une structure avant fixe pour dégager des ouvertures radialement vers l'extérieur, ainsi que des grilles disposées dans ces ouvertures pour dévier le flux les traversant vers l'avant, qui sont solidaires du capot mobile, remarquable en ce qu'il comporte deux volets pivotants disposés sensiblement symétriquement par rapport à un plan axial, qui sont reliés à la structure avant fixe par des biellettes, chaque volet comprenant des points pivots reliés au capot de manière à ce que lors du recul du capot, ces volets pivotent en fermant en majeure partie le passage du flux direct.

Un avantage de cet inverseur de poussée est que les volets peuvent disposer d'une surface intérieure sensiblement lisse qui est bien intégrée autour du passage du flux direct, limitant les pertes aérodynamiques en jet direct, tout en fermant de manière efficace ce passage pour renvoyer une grande partie du flux vers l'extérieur, donnant aussi une bonne efficacité en jet inversé.

L'inverseur de poussée selon l'invention peut comporter de plus une ou plusieurs des caractéristiques suivantes, qui peuvent être combinées entre elles.

Avantageusement, chaque volet est relié à la structure fixe par une biellette, ce qui permet un déplacement d'un point de rotation qui le rattache à cette structure.

Avantageusement, les points pivots restent sensiblement dans le plan de symétrie, lors de la course de déploiement de l'inverseur de poussée.

Avantageusement, dans la position déployée de l'inverseur, les volets constituent une forme en « V » sensiblement symétrique par rapport au plan de symétrie, comprenant une pointe tournée vers l'avant formant dans ce plan une ligne continue où les deux volets se rejoignent, et deux faces inclinées qui dirigent l'écoulement radialement vers l'extérieur. On a ainsi un bon déport de cet écoulement vers l'extérieur.

En complément chaque volet peut disposer sur son pourtour extérieur, d'un béquet qui est radialement tourné sensiblement vers l'extérieur quand l'inverseur de poussée est ouvert. On améliore ainsi le déport de l'écoulement vers l'avant.

Avantageusement, chaque biellette disposée sensiblement axialement, est fixée de manière pivotante au volet par un axe de rotation se trouvant radialement vers l'extérieur de la veine annulaire.

Selon un mode de réalisation, le système de guidage et d'actionnement de l'inverseur de poussée comporte un unique vérin, et deux rails de guidage disposés sensiblement à l'opposé de ce vérin.

Selon un autre mode de réalisation, le système de guidage et d'actionnement de l'inverseur de poussée comporte un unique rail de guidage disposé au point supérieur, et trois vérins non synchronisés répartis sur le pourtour de la nacelle.

L'invention a aussi pour objet une nacelle de turboréacteur comportant un inverseur de poussée comprenant l'une quelconque des caractéristiques précédentes.

Avantageusement, la nacelle est prévue pour recevoir un turboréacteur équipé d'un dispositif de mélange du flux primaire de gaz chauds avec le flux secondaire d'air froid.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 à 4 sont des vues d'un inverseur de poussée selon l'invention qui est fermé, présenté successivement en vue arrière, en écorché, en perspective et en coupe axiale ;
- les figures 5 à 8 sont des vues de cet inverseur de poussée en cours d'ouverture, présenté successivement de la même manière ;
- les figures 9 à 12 sont des vues de cet inverseur de poussée entièrement ouvert, présenté successivement de la même manière ;
- Les figures 13 et 14 présentent en perspective et en coupe axiale un becquet disposé sur les volets ;
- La figure 15 présente en coupe axiale une butée d'ouverture maximum des grilles ;
- les figures 16 et 17 présentent respectivement en coupe transversale suivant le plan de coupe XVI-XVI et en coupe axiale, un premier système de guidage des volets ; et
- la figure 18 présente en coupe transversale suivant le plan de coupe XVI-XVI, en variante un deuxième système de guidage des volets.

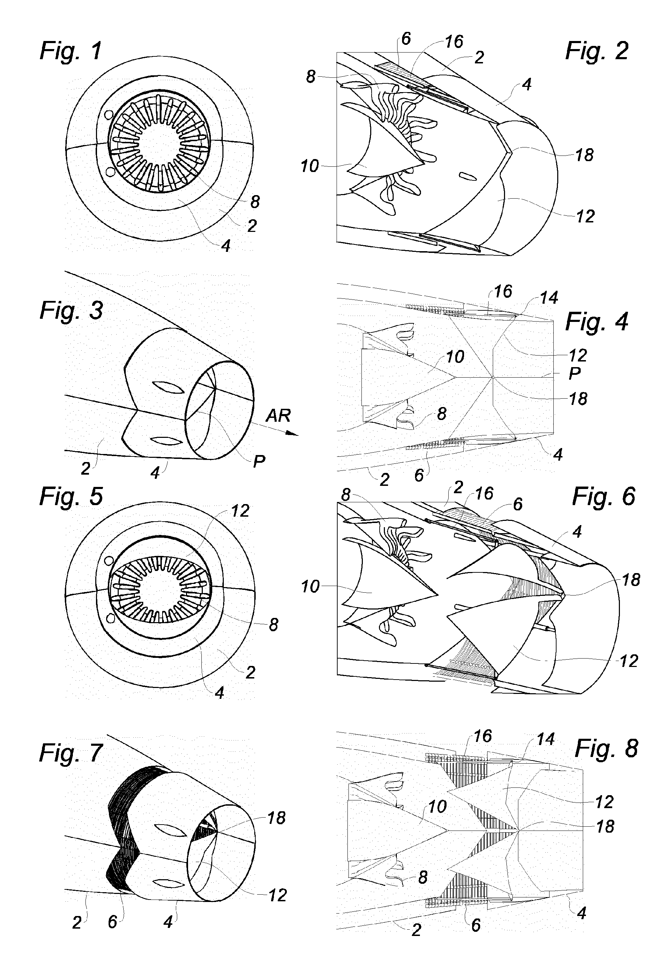

Les figures 1 à 4 présentent la partie arrière d'une nacelle de turboréacteur, la direction axiale arrière étant indiquée par la flèche « AR », comprenant une structure avant fixe 2 entourant la veine annulaire, et un capot mobile 4 ajusté en arrière de cette structure avant quand il est fermé.

Le flux primaire de gaz chauds est mélangé au flux secondaire d'air froid par un mélangeur 8.

Le capot 4 est relié à la structure avant 2 par des moyens de guidage longitudinaux, qui permettent un coulissement de ce capot vers l'arrière commandé par au moins un vérin, pour ouvrir un passage du flux mélangé radialement vers l'extérieur.

Des grilles d'inversion de poussée 6 formant chacune un secteur angulaire, comprenant une succession d'aubes profilées, sont liées au capot 4 de manière à reculer avec lui pour venir dans les ouvertures extérieures dégagées par ces capots, et à renvoyer l'écoulement au moins partiellement vers l'avant.

Deux volets pivotants 12 disposés sensiblement symétriquement par rapport à un premier plan de symétrie axial P, comprennent chacun un axe de rotation 14 parallèle à ce plan, disposé au milieu du volet et à l'extérieur de la veine annulaire. L'axe de rotation 14 est relié à la structure avant fixe 2 par une biellette 16 sensiblement axiale, fixée à cette structure par un pivot.

Les volets pivotants 12 sont aussi sensiblement symétriques par rapport au plan axial perpendiculaire au premier plan de symétrie P.

Chaque volet 12 forme en vue arrière un demi-cercle ajusté à la périphérie du passage du flux, comprenant deux points pivots diamétralement opposés 18 qui sont dans le plan de symétrie P. Ces points pivots 18 sont liés au capot mobile 4, de manière à reculer avec lui lors de l'ouverture de l'inverseur de poussée.

Les figures 5 à 8 présentent un recul partiel du capot mobile 4, qui entraîne les points pivots 18 des deux volets 12. Ces deux volets 12 commencent à pivoter autour de l'axe de rotation 14 sous l'effort de traction des biellettes 16, ce qui entraîne aussi une rotation des points pivots 18.

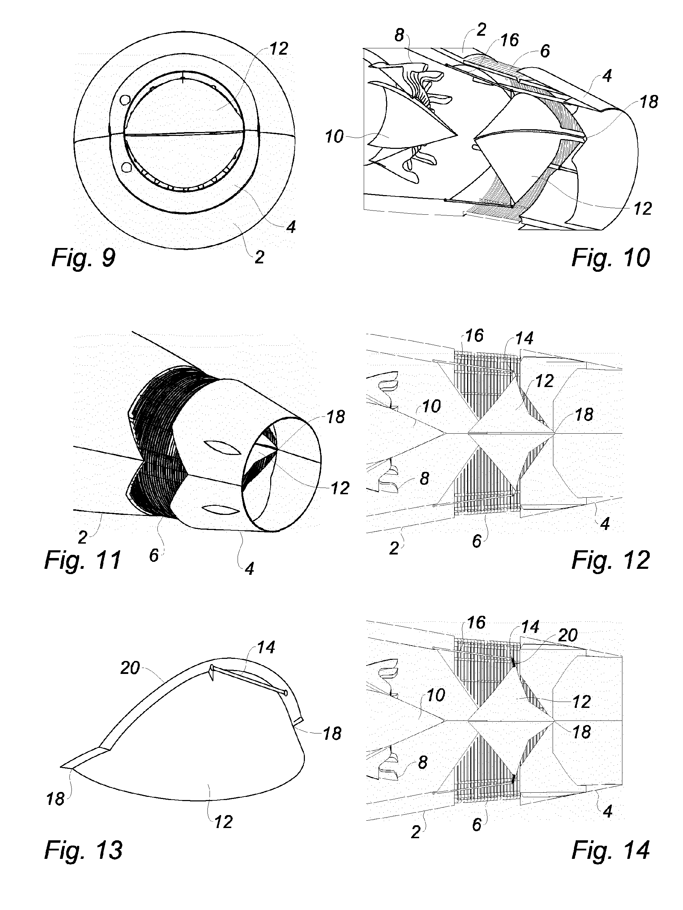

Les figures 9 à 12 présentent un recul complet des capots mobiles 4, qui mettent complètement en arrière les points pivots 18 des deux volets 12. Ces deux volets 12 ont terminé de pivoter en se fermant comme des paupières, leurs biellettes 16 s'étant légèrement inclinées afin de suivre les axes de rotation 14 qui se sont rapprochés de l'axe de la nacelle.

Les deux volets 12 dans cette position ferment en grande partie le passage du flux direct en constituant une forme en « V » symétrique par rapport au plan P, comprenant une pointe tournée vers l'avant formant dans ce plan une ligne continue où les deux volets se rejoignent, et deux faces inclinées qui rejettent le flux radialement vers l'extérieur en passant par les grilles d'inversion 6.

On obtient ainsi une inversion de la poussée comportant une bonne efficacité grâce à la forte déviation du flux radialement vers l'extérieur donnée par les volets 12. De plus les pertes en jet direct sont faibles grâce à la surface lisse de l'intérieur des volets 12 lorsque ceux-ci sont en position de jet direct.

Les aubages des grilles 6 sont orientés de façon à privilégier certaines directions de renvoi du jet inversé, permettant d'éviter de le diriger vers le sol, le fuselage ou les empennages de l'avion, afin de protéger ceux-ci de l'impact de corps étrangers.

Les figures 13 et 14 présentent un béquet 20 disposé en option sur le pourtour extérieur de chaque volet 12, qui est tourné radialement sensiblement vers l'extérieur quand l'inverseur de poussée est ouvert, de manière à améliorer la déviation du flux mélangé radialement vers les grilles d'inversion de poussée 6. Ces becquets 20 améliorent l'efficacité du jet inversé, et permettent de mieux équilibrer les volets 12 de façon à limiter les efforts dans les biellettes 16.

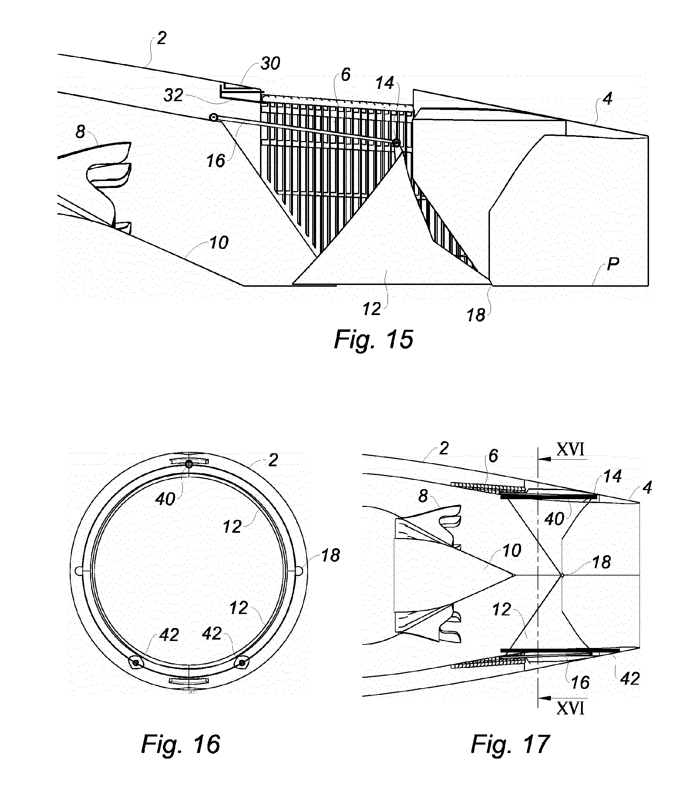

La figure 15 présente une butée 32 disposée à l'avant d'une prolongation des grilles 6 vers l'avant, qui vient collaborer avec une butée fixe 30 disposée sur la structure avant 2, de manière à former un contact entre le capot 4 et les grilles 6 d'une part et la structure avant 2 d'autre part, pour soulager les vérins de commande quand l'inverseur de poussée est entièrement déployé.

Les figures 16 et 17 présentent un premier système de guidage et d'actionnement de l'inverseur de poussée, comprenant un vérin 40 et deux rails de guidage 42 disposés à l'opposé du vérin.

On a de plus au moins deux verrous externes verrouillant la position fermée de l'inverseur de poussée, ainsi qu'un verrou supplémentaire disposé dans le vérin 40.

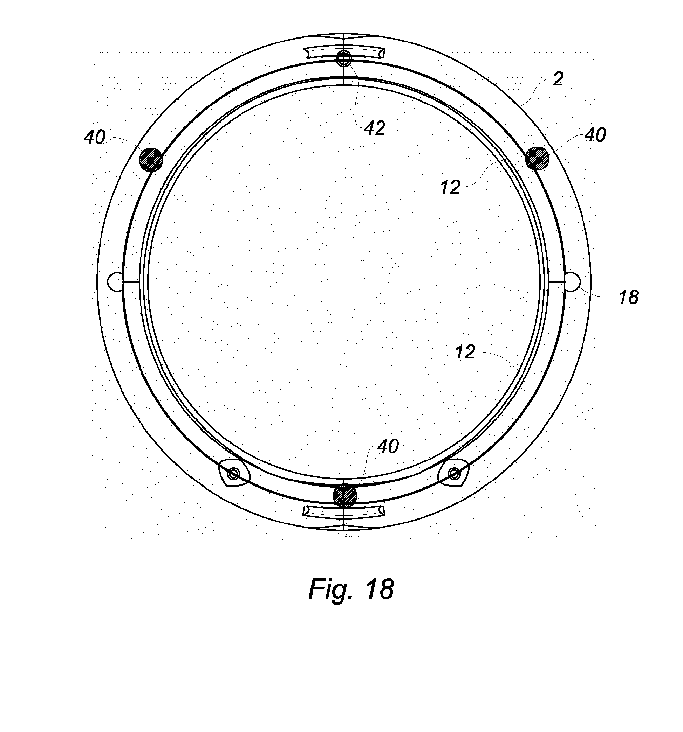

La figure 18 présente un deuxième système de guidage et d'actionnement, comprenant un unique rail de guidage 42, et trois vérins 40 non synchronisés qui sont régulièrement répartis sur le pourtour, un de ces vérins étant disposé à l'opposé du rail.

On a de plus un verrou disposé dans chaque vérin 40, qui verrouille la position fermée de l'inverseur de poussée.

D'une manière générale on peut obtenir avec ce type d'inverseur de poussée une efficacité en jet inversé de l'ordre de 40 à 50%. De plus la perte de pression totale en jet direct est plus faible, de l'ordre de 0.2 à 0.3%, alors que les autres systèmes d'inversion de poussée donnent généralement une perte de l'ordre de 0.4% à 0.5%.

On a aussi besoin d'un effort limité d'actionnement de l'inverseur de poussée, qui permet de réduire sensiblement la taille des vérins, ainsi que les efforts en fatigue de la structure. On peut alors diminuer les temps de déploiement de cet inverseur, et donc les distances d'atterrissage. De plus le débit qui peut être maintenu dans l'inverseur pendant son déploiement est toujours supérieur au débit en jet direct, ce qui améliore la compatibilité avec les différents types de moteur.

Par ailleurs la masse ajoutée de ce système d'inverseur de poussée est relativement faible, et la surface intérieure de la nacelle qui peut être traitée pour améliorer les performances acoustiques en réduisant les émissions sonores, peut être augmentée.

## Revendications

1. Inverseur de poussée d'une nacelle de turboréacteur à double flux, comprenant un capot mobile (4) qui recule par rapport à une structure avant fixe (2) pour dégager des ouvertures radialement vers l'extérieur, ainsi que des grilles (6) disposées dans ces ouvertures pour dévier le flux les traversant vers l'avant, qui sont solidaires du capot mobile, **caractérisé en ce qu'**il comporte deux volets pivotants (12) disposés sensiblement symétriquement par rapport à un plan axial (P), qui sont reliés à la structure avant fixe par des biellettes (16), chaque volet comprenant des points pivots (18) reliés au capot (4) de manière à ce que lors du recul du capot, ces volets pivotent en fermant en majeure partie le passage du flux direct, et **en ce que** chaque volet (12) dispose sur son pourtour extérieur, d'un béquet (20) qui est radialement tourné sensiblement vers l'extérieur quand l'inverseur de poussée est ouvert.

2. Inverseur de poussée selon la revendication 1, **caractérisé en ce que** chaque volet (12) est relié à la structure fixe par une biellette (16).

3. Inverseur de poussée selon la revendication 1 ou 2, **caractérisé en ce que** les points pivots (18) restent sensiblement dans le plan de symétrie (P), lors de la course de déploiement de l'inverseur de poussée.

4. Inverseur de poussée selon l'une quelconque des revendications précédentes, **caractérisé en ce que** dans sa position déployée, les volets (12) constituent une forme en « V » symétrique par rapport au plan de symétrie (P), comprenant une pointe tournée vers l'avant formant dans ce plan une ligne continue où les deux volets se rejoignent, et deux faces inclinées qui dirigent l'écoulement radialement vers l'extérieur.

5. Inverseur de poussée selon l'une quelconque des revendications précédentes, **caractérisé en ce que** chaque biellette (16) disposée sensiblement axialement, est fixée de manière pivotante au volet (12) par un axe de rotation (14) se trouvant radialement vers l'extérieur de la veine annulaire.

6. Inverseur de poussée selon l'une quelconque des revendications précédentes, **caractérisé en ce que** son système de guidage et d'actionnement comporte un unique vérin (40), et deux rails de guidage (42) disposés sensiblement à l'opposé de ce vérin.

7. Inverseur de poussée selon l'une quelconque des revendications 1 à 5, **caractérisé en ce que** son système de guidage et d'actionnement comporte un unique rail de guidage (42) disposé au point supérieur, et trois vérins (40) non synchronisés répartis sur le pourtour de la nacelle.

8. Nacelle de turboréacteur comportant un inverseur de poussée, **caractérisée en ce que** cet inverseur est réalisé selon l'une quelconque des revendications précédentes.

9. Nacelle de turboréacteur selon la revendication 8, **caractérisé en ce qu'**elle est prévue pour recevoir un turboréacteur équipé d'un dispositif de mélange (8) du flux primaire de gaz chauds avec le flux secondaire d'air froid.
